# EUROPÄISCHE PATENTSCHRIFT

(11) **EP 1 642 469 B1**
(45) Veröffentlichungstag und Bekanntmachung des Hinweises auf die Patenterteilung: **26.08.2015**
(21) Anmeldenummer: 04738639.6
(22) Anmeldetag: 08.06.2004
(51) Int. Cl.: H04Q 3/00, H04M 3/24

(54) **VERFAHREN UND SYSTEM ZUR ERHÖHUNG DER VERMITTLUNGSKAPAZITÄT IN TELEKOMMUNIKATIONSNETZWERKEN DURCH ÜBERTRAGUNG ODER AKTIVIERUNG VON SOFTWARE**
METHOD AND SYSTEM FOR INCREASING TRANSMISSION CAPACITY OF A TELECOMMUNICATION NETWORK BY SOFTWARE TRANSMISSION OR ACTIVATION
PROCEDE ET SYSTEME D'AUGMENTATION DE LA CAPACITE DE TRANSMISSION DE RESEAUX DE TELECOMMUNICATION PAR TRANSMISSION OU ACTIVATION DE LOGICIELS

(30) Priorität: 26.06.2003 DE 10328661
(43) Veröffentlichungstag der Anmeldung: 05.04.2006
(73) Patentinhaber: Deutsche Telekom AG, 53113 Bonn (DE)
(72) Erfinder: TRINKEL, Marian, 52372 Kreuzau OT Untermaubach (DE); BINDEL, Frank, 53639 Königswinter (DE); DAUSSMANN, Frank, 67454 Hassloch (DE)
(74) Vertreter: Cohausz Hannig Borkowski Wißgott
(86) Internationale Anmeldenummer: PCT/DE2004/001187
(87) Internationale Veröffentlichungsnummer: WO 2005/009058

(56) Entgegenhaltungen:
- WO-A-97/22054
- US-A- 5 951 633

## Beschreibung

Die Erfindung betrifft ein Verfahren zum Betrieb wenigstens eines Telekommunikationsnetzwerkes, wobei in einem zentralen Server einer Vermittlungsstelle des wenigstens einen Telekommunikationsnetzwerks eine Software zur Durchführung von Vermittlungen von Telekommunikationsverbindungen abläuft. Die Erfindung betrifft weiterhin ein System zur Durchführung eines solchen Verfahrens.

Verfahren der oben genannten Art sind allgemein bekannt, insbesondere bei der heutigen Digitalisierung der Telekommunikationstechnik, so dass üblicherweise mit beispielhaftem Bezug auf ein Telefonnetzwerk eine Gesprächsvermittlung zwischen zwei Gesprächsteilnehmern softwarebasiert und digital abläuft. Hierbei kann eine solche Software oftmals nicht nur eine Verbindung zwischen zwei Kommunikationsteilnehmern herstellen, sondern gegebenenfalls noch andere Dienste bereitstellen, wie z.B. automatische Ansagen und Entgegennahme von Nachrichten z.B. bei netzintemen Anrufbeantwortem oder ähnliches.

Bei den bekannten Verfahren läuft beispielsweise eine entsprechende Software zur Organisation und/oder Durchführung von Vermittlungen oder Diensten in einer jeweiligen Vermittlungsstelle eines Telekommunikationsnetzwerkes, wobei in einem Telekommunikationsnetzwerk eines Netzbetreibers mehrere Vermittlungsstellen vorhanden sein können, die beispielsweise zugewiesene regionale Bereiche abdecken.

Es ist weiterhin bekannt, dass es bei nicht ausreichender Vermittlungskapazität z.B. einer netzeigenen Vermittlungsstelle zu Vermittlungsengpässen kommen kann, d.h. z.B. wiederum mit Bezug auf das Telefonnetzwerk, dass eine angewählte Verbindung nicht zustande kommt oder ein gewünschter Dienst nicht angeboten wird, da die zuständige Vermittlungsstelle über keine weitere Kapazität mehr verfügt.

Zu einer nicht ausreichenden Vermittlungskapazität kann es hierbei in unterschiedlichen Fällen kommen. Beispielsweise kann es in der Silvesternacht vorkommen, dass Millionen von Menschen pünktlich zum Jahreswechsel ihre Freunde und Verwandte telefonisch erreichen wollen, um Wünsche für das neue Jahr zu übermitteln. Aufgrund dieses gehäuften gleichzeitigen Telekommunikationsaufkommens wird oftmals festgestellt, dass der angewählte Gesprächspartner oder ein Dienst mangels ausreichender Vermittlungskapazität nicht erreicht wird und lediglich ein Besetztzeichen oder eine andere entsprechende Mitteilung erfolgt.

Auch in anderen, beliebig denkbaren Situationen kann es zu erhöhten Telekommunikationsaufkommen kommen, beispielsweise allgemein bei Feiertagen, Medienereignissen, die zu einer telefonischen Teilnahme aufrufen oder aber auch bei Gefahrensituationen z.B. in einem Notfall, wenn eine Vielzahl von Personen gleichzeitig Hilfsdienste oder Verwandte erreichen möchte bzw. wenn eine Vielzahl von Personen informiert werden soll, beispielsweise bei Großbränden oder Großunglücken.

Das Dokument US-A-5,951,633 offenbart ein Verfahren zum Betrieb eines Telekommunikationsnetzes, wobei in einem zentralen Server als Standard-Ressource des Netzwerks eine Software zur Durchführung von Vermittlungen von Telekommunikationsverbindungen abläuft und wobei bei nicht ausreichender Vermittlungskapazität der Vermittlungsstellen eine Software auf einem weiteren Server als Überlauf-Ressource des Telekommunikationsnetzwerks zumindest zeitweise aktiviert wird. Das Dokument WO 97/22054 A beschreibt weiterhin die Möglichkeit zur Wahrung einer Dienstbereitschaft bei einem Prozessorausfall Software auf andere Netzelemente zu übertragen.

Aufgabe der Erfindung ist es ein Verfahren und ein System bereitzustellen, mit dem auch in Situationen erhöhter Telekommunikationstätigkeit eine insgesamt ausreichende Vermittlungskapazität gewährleistet werden kann.

Diese Aufgabe wird erfindungsgemäß dadurch gelöst, dass bei nicht ausreichender Vermittlungskapazität einer netzeigenen Vermittlungsstelle zur Erhöhung der Vermittlungskapazität von dem Server der Vermittlungsstelle oder einer hierzu autorisierten Stelle eine Anzahl von Softwarepaketen an wenigstens eine weitere Vermittlungsstelle abgesendet wird, die der Anzahl der benötigten Vermittlungsstellen entspricht, um eine benötigte Vermittlungskapazität zu erhalten, wobei jedes Softwarepaket beim Erreichen einer Vermittlungsstelle zumindest zeitweise eine lauffähige Software zur Durchführung einer Massenalarmierung installiert oder eine vorhandene Software zur Durchführung einer Massenalarmierung aktiviert und diese Vermittlungsstelle nach der Installation / Aktivierung als von der Software belegt kennzeichnet, so dass weitere an eine belegte Vermittlungsstelle einlaufende Softwarepakete automatisch abgewiesen und umgeleitet werden bis dass sämtliche versandte Softwarepakete eine freie Vermittlungsstelle aufgefunden und belegt haben, insbesondere um die Vermittlungskapazität zu erhöhen um Nachrichten gezielt und massiv absetzen zu können.

Mittels des genannten Verfahrens kann somit sicher gestellt werden, dass bei einer nicht ausreichenden Vermittlungskapazität eine Kopie der Software der Vermittlungsstelle mit nicht ausreichender Kapazität oder aber auch eine andere Software zur Durchführung der Vermittlung von Telekommunikationsverbindungen auf andere Vermittlungsstellen übertragen wird, die sowohl in dem Telekommunikationsnetzwerk des betroffenen Netzbetreibers als auch in Telekommunikationsnetzwerken anderer Netzbetreiber grundsätzlich zur Verfügung stehen.

Ebenso ist es möglich, dass auf anderen Vermittlungsstellen, insbesondere anderer Netzbetreiber, bereits eine solche Software installiert ist, die lediglich aktiviert werden muss, um die Vermittlungskapazitäten dieser Vermittlungsstelle zu erhalten.

Zwar werden grundsätzlich sämtliche Vermittlungsstellen in Telekommunikationsnetzwerken über eine entsprechende Software zur Organisation und Durchführung von Vermittlungen verfügen, jedoch findet das erfindungsgemäße Verfahren insbesondere Anwendung bei der Übertragung / Aktivierung spezieller Software, welche beispielsweise erweiterte Aufgaben oder Dienste übernimmt, die über die üblichen Vermittlungsleistungen hinausgeht.

Hierbei kann es sich z.B. um eine Software handeln, die in Ausnahmefällen, beispielsweise Notfällen mit Gefahrensituation oder auch beim Verteidigungsfall eines Landes sicher stellt, dass innerhalb kürzester Zeit eine Vielzahl von Personen mit einer bestimmten Nachricht erreicht wird.

Beispielsweise kann es sich um eine Software handeln, die in einem Brandfall die Bevölkerung der umliegenden Umgebung automatisch über ein Telekommunikationsnetzwerk, beispielsweise das Telefonnetz, per e-mail über das Internet, das Mobilfunknetz oder auch Radio bzw. Rundfunksendungen z.B. dahingehend informiert, dass Fenster geschlossen werden sollen oder dass andere Anweisungen zu befolgen sind. Auch können durch eine solche Software eingehende Rufe besorgter Bürger entgegengenommen und zu einem späteren Zeitpunkt weitervermittelt werden. Ein Verfahren zur Durchführung solcher Dienste mittels einer Software ist beispielsweise in der vorangemeldeten DE 102 04 300 derselben Anmelderin beschrieben.

Ebenso kann es sich um einen Anwendungsfall handeln, bei der mittels einer Software allgemein jegliche Art von Massenbenachrichtigung durchgeführt werden soll. Es kann z.B. im Verteidigungsfall auf Anweisung der Regierungsorgane innerhalb kürzester Zeit über eine derartige Software zur Organisation und Durchführung von Vermittlungen von Telekommunikationsverbindungen durch eine bestimmte Mitteilung eine Alarmierung und Einberufung aller dienstverpflichteten Soldaten und Reservisten erfolgen.

Gemäß dem erfindungsgemäßen Verfahren kann es vorgesehen sein, dass nach einer Übertragung/Aktivierung eine derartige Software auf mehreren Servern von Vermittlungsstellen eines Telekommunikationsnetzwerkes oder verschiedener Telekommunikationsnetzwerke, beispielsweise unterschiedlicher Netzbetreiber, gleichzeitig abläuft oder dass eine Software nur auf einem Server eines ausgewählten Telekommunikationsnetzwerkes mit ausreichender Vermittlungskapazität läuft. So kann dementsprechend bei der Feststellung nicht ausreichender Vermittlungskapazität einer betroffenen Vermittlungsstelle beispielsweise durch die Software selbst oder auch durch eine von außen initiierte Anweisung eine Übertragung dieser oder einer anderen Software auf andere Vermittlungsstellen erfolgen oder eine auf einer solchen Vermittlungsstelle schon für diesen Fall vorhandene Software aktiviert werden, so dass in der Summe eine ausreichende Vermittlungskapazität z.B. zur Durchführung einer Massenalarmierung erreicht wird.

Es kann in einer bevorzugten Ausgestaltung vorgesehen sein, dass vor einer Übertragung/Aktivierung einer Software auf eine oder mehrere andere Vermittlungsstellen bzw. in ein oder mehrere andere Telekommunikationsnetzwerke die bei dieser Vermittlungsstelle bzw. bei diesem Telekommunikationsnetzwerk vorliegende Aktivität bzw. die verfügbaren Vermittlungskapazitäten erfragt werden. So kann gewährleistet werden, dass eine Software nur auf solche Vermittlungsstellen bzw. in solche Telekommunikationsnetzwerke übertragen bzw. aktiviert wird, die auch geeignet sind, um die Vermittlungskapazität nachhaltig zu erhöhen.

Die Auswahl einer weiteren Vermittlungsstelle bzw. eines weiteren Telekommunikationsnetzwerkes kann unter verschiedenen Gesichtspunkten erfolgen. Beispielsweise kann die Auswahl erfolgen nach der verfügbaren Vermittlungskapazität und/oder nach einem Quoten/Prioritätenschlüssel, so dass hier beispielsweise durch die Erhöhung der Vermittlungskapazität durch die Hinzunahme weiterer Kapazitäten anderer Netzbetreiber eventuelle Ungerechtigkeiten oder Benachteiligungen dieser Netzbetreiber ausgeschlossen sind bzw. zumindest geregelt werden.

Da es vorkommen kann, dass die ursprünglich für die Organisation und Durchführung von Vermittlungen einer Vermittlungsstelle vorgesehene Software mit den darin implementierten Diensten, wie beispielsweise die Massenbenachrichtigung in der konkreten Version dieser Vermittlungsstelle, beispielsweise hinsichtlich des Betriebssystems, nicht auf anderen Vermittlungsstellen anderer Netzbetreiber lauffähig ist, kann es vorgesehen sein, dass für diesen Fall von einer Software, welche einen bestimmten, z.B. oben genannten Dienst betreibt, unterschiedliche Versionen vorgehalten werden, so dass für diese Fälle eine entsprechend ausgewählte und angepasste Softwareversion auf eine andere Vermittlungsstelle, z.B. eines anderen ausgewählten Telekommunikationsnetzwerkes, übertragen werden kann, wobei dann gewährleistet ist, dass diese Software mit ihren implementierten Funktionen auf dieser Vermittlungsstelle bzw. deren Server lauffähig ist. Diese Problematik stellt sich nicht, sofern in anderen Vermittlungsstellen schon eine lediglich zu aktivierende Software vorhanden ist, da diese hinsichtlich der betreffenden Vermittlungsstelle angepasst ist.

Zur Vereinfachung und Automatisierung einer derartigen Übertragung bzw. Aktivierung ist es erfindungsgemäß vorgesehen" dass im Fall nicht ausreichender Vermittlungskapazität von dieser Vermittlungsstelle bzw. deren Server oder einer anderen, hierzu autorisierten Stelle eines oder mehrere Softwarepakete in eines oder mehrere Telekommunikationsnetzwerke insbesondere gleichzeitig abgesandt wird.

Für eine Übertragung einer Software kann es vorgesehen sein, dass in einem solchen Softwarepaket verschiedene Versionen einer Software vorliegen können, so dass bei einer Übertragung auf eine bestimmte Vermittlungsstelle automatisch aus dem Softwarepaket eine entsprechend passende Version ausgesucht und installiert wird. Hat lediglich eine Aktivierung zu erfolgen, so ist es ausreichend, dass mit dem Softwarepaket wenigstens eine aktivierende Triggersoftware versendet wird, um die auf den Vermittlungsstellen vorhandene Software durch triggernden Befehl zu alctivieren. Eine solche Triggersoftware kann für alle Vermittlungsstellen gleich oder speziell ausgewählt sein.

Es kann hier bevorzugt vorgesehen sein, dass ein Softwarepaket der beiden obengenannten Alternativen ein sich immer wieder selbst verschickendes Programm oder Makro darstellt, welches sich quasi selbständig lawinenartig über eines oder mehrere Telekommunikationsnetzwerke ausbreitet. Hierfür kann beispielsweise ein solches Softwarepaket eine Liste sämtlicher anzusteuernder Vermittlungsstellen, beispielsweise anhand ihrer spezifischen Netzkennungen enthalten, so dass gezielt eine Versendung der Softwarepakete an die Adressen dieser Vermittlungsstellen erfolgen kann, wo die Übertragung oder Aktivierung stattfindet.

Ein solches Softwarepaket kann auch zusätzliche Daten mitführen, z.B. Nachrichten, die bei einer Alarmierung bzw. Massenbenachrichtigung verschickt werden sollen, die Zieladressen oder auch nur eine Regionsangabe anhand der noch Zieladressen zu ermitteln sind, an die Nachrichten gesendet werden sollen.

Erfindungsgemäß werden mehrere Softwarepakete, deren Anzahl beispielsweise der Anzahl zu erreichender Vermittlungsstellen entspricht, in die Telekommunikationsnetze entsendet, wobei ein Softwarepaket beim Erreichen einer Vermittlungsstelle in dieser automatisch eine lauffähige Softwareversion installiert oder die dort vorhandene Software aktiviert und diese Vermittlungsstelle nach der Installation/Aktivierung als von der Software belegt kennzeichnet, so dass eventuell weitere, an dieser belegten Vermittlungsstelle einlaufende Softwarepakete automatisch abgewiesen und umgeleitet werden, bis dass sämtliche in eines oder mehrere Telekommunikationsnetzwerke versandte Softwarepakete eine freie Vermittlungsstelle aufgefunden und belegt haben.

Wird z.B. festgestellt, dass die Vermittlungskapazität einer Vermittlungsstelle nicht ausreicht und Kapazitäten von 10 weiteren Vermittlungsstellen benötigt werden, so würde es gemäß der genannten Ausführung ausreichend sein, 10 Softwarepakete in eines oder mehrere Telekommunikationsnetz abzusenden, die automatisch 10 freie verfügbare Vermittlungsstellen belegen bis alle Softwarepakete eine Vermittlungsstelle gefunden haben.

Wie bereits vorangehend erwähnt, kann es vorgesehen sein, dass eine solche Software eine automatische Benachrichtigung wenigstens einer Gruppe von Personen durchführt, insbesondere zur Alarmierung in Gefahrensituationen, beispielsweise über Festnetz, Mobiltelefon, Internet, e-mail, Webradio oder andere Dienste.

Gerade in kritischen Fällen, wie beispielsweise der Alarmierung in Gefahrensituationen oder der Einberufung von Soldaten über die Regierungsorgane, kann es vorgesehen sein, dass eine solche Software hierfür vorgesehenen Software im normalen Betriebsfall, d.h. vor einer nötig werdenden Übertragung, nur in einem Server einer zentralen Stelle, z.B. einem zertifizierten Trustcenter abläuft, so dass eventuell mit der Software in Verbindung stehende Sicherheitsaspekte in jedem Fall gewahrt bleiben. Lediglich in dem Ausnahmefall, dass eine Vermittlungskapazität, die beispielsweise von einem solchen Trustcenter zur Verfügung gestellt wird, bei einer nötig werdenden Massenalarmierung nicht ausreicht, kann es vorgesehen sein, dass eine solche Software beispielsweise durch die oben genannten Arten der Rundsendung die zentrale Stelle, z.B. das Trustcenter verlässt bzw. auf anderen Vermittlungsstelle aktiviert wird und dann auch auf anderen Vermittlungsstellen zumindest zeitweise abläuft, um die Notfallsituation zu bewältigen.

Eine solche zentrale Stelle kann auch dafür Sorge tragen, dass evtl. bei anderen Vermittlungsstellen vorhandene und lediglich zu aktivierende Software gewartet und gepflegt wird, beispielsweise immer in einer aktuellen Version gehalten wird.

Bei einer lediglich zeitweisen Belegung anderer Vermittlungsstellen durch eine Software der genannten Art oder eine zeitweise Aktivierung kann es weiterhin ergänzend vorgesehen sein, dass nach Ablauf einer bestimmten Zeitdauer sich eine Software, die eine Vermittlungsstelle belegt hat, automatisch wieder deinstalliert bzw. deaktiviert und die Vermittlungskapazitäten an die Vermittlungsstelle zurückgibt. Es kann ebenso vorgesehen sein, dass die Freigabe/Deaktivierung belegter Vermittlungsstellen von außen initiiert wird, beispielsweise wiederum durch die Absendung eines oder mehrerer Softwarepakete, welches die Deinstallation/Deaktivierung der vorher übertragenen Software koordiniert und durchführt.

Gemäß der Erfindung kann es vorgesehen sein, dass insbesondere bei einer Software zur Durchführung von Vermittlungen an wenigstens eine bestimmte Gruppe von Personen eine solche Software Zugriff nimmt auf eine Portabilitätsdatenbank mit netzübergreifenden Netzkennungen dieser zu vermittelnder bzw. zu benachrichtigender Personen oder aber auch dass die Software auf die jeweils netzinternen Datenbanken beispielsweise eines anderen ausgewählten Telekommunikationsnetzbetreibers zugreift.

So wird sicher gestellt, dass die Software, sofern sie nicht selbst über eine interne Datenbank verfügt, durch Rückgriff auf global verfügbare Datenbanken oder die Datenbanken des bestimmten Netzbetreibers immer ausreichende Informationen über die Netzkennungen zu erreichender Personen bzw. Netzanschlüsse erhält.

Beispielsweise kann in einer Gefahrensituation die Notwendigkeit bestehen alle Personen in einem bestimmten Stadtgebiet zu erreichen. Hierfür kann die Software Rückgriff nehmen auf die genannten Datenbanken, um zu ermitteln, welche Personen und mit welcher Netzkennung (Mobilnummer, Festnetz, Email etc) in diesem Gebiet verzeichnet sind. Die Netzkennungen können automatisch geladen und z.B. automatisch generierte Nachrichten oder vorgegebene Information an diese Netzkennungen verschickt werden.

Insbesondere das erfindungsgemäße Verfahren kann durchgeführt werden mit einem System, welches wenigstens ein Telekommunikationsnetzwerk umfasst mit einem Server, auf dem eine Software zur Durchführung und/oder Organisation von Vermittlungen oder Diensten abläuft, wobei das System sicher stellt, dass bei nicht ausreichender Vermittlungskapazität z.B. einer netzeigenen Vermittlungsstelle diese Software oder eine andere auf wenigstens einen weiteren Server wenigstens eines weiteren auswählbaren Telekommunikationsnetzwerkes gegebenenfalls auch desselben Netzwerkes zumindest zeitweise übertragbar ist, um die Kapazität der Vermittlungen zu erhöhen.

Ein Ausführungsbeispiel der Erfindung ist in der nachfolgenden Abbildung schematisch dargestellt.

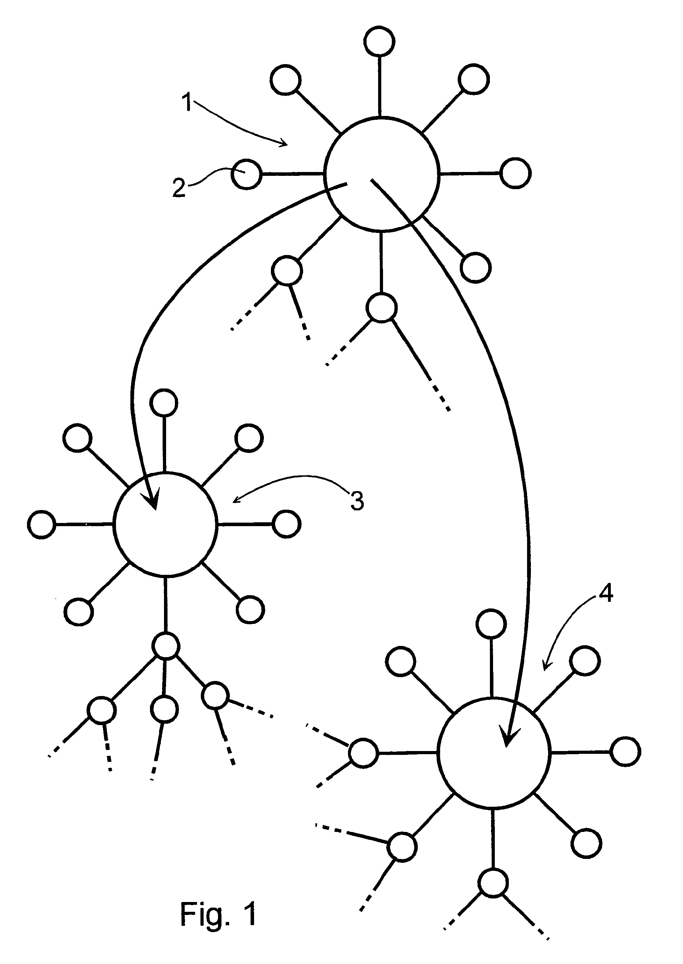

Die Figur 1 zeigt ein erstes Telekommunikationsnetzwerk 1, welches eine Vielzahl von Vermittlungsstellen 2 umfasst, die jeweils einen Server aufweisen mit einer Software zur Durchführung und Organisation von Vermittlungen. Diese Vermittlungsstellen können z.B. regional zugeordnet sein. Es kann hier beispielsweise vorgesehen sein, dass das Telekommunikationsnetzwerk 1 vollständig über eine zertifizierte Stelle, beispielsweise eine der Regierung eines Landes unterstehende Stelle, organisiert wird. So kann diese Stelle dafür eingerichtet sein in Notfallsituationen betroffene Bevölkerungsgruppen zu benachrichtigen.

Tritt nun eine entsprechende Situation auf, bei der die Gruppe der zu benachrichtigenden Personen z.B. einer Region derart groß ist, dass die Vermittlungskapazität der üblicherweise hierfür vorgesehenen Vermittlungsstelle nicht mehr ausreicht, so kann die Software der Abbildung entsprechend auf andere Telekommunikationsnetzwerke 2 und 3 übertragen werden oder in diesen schon vorhandene Software aktiviert werden, wobei die ausgewählten Telekommunikationsnetze bzw. die darin vorhandenen Vermittlungsstellen eine höhere Vermittlungskapazität, insbesondere für diese Region, aufweisen. So wird sicher gestellt, dass in einer entsprechenden Situation immer eine ausreichende Vermittlungskapazität erreicht wird, um innerhalb kürzester Zeit die benötigten Vermittlungen durchführen zu können und z.B. Benachrichtigungen zu versenden.

## Patentansprüche

1. Verfahren zum Betrieb wenigstens eines Telekommunikationsnetzwerkes, wobei in einem zentralen Server einer Vermittlungsstelle des wenigstens einen Telekommunikationsnetzwerks eine Software zur Durchführung von Vermittlungen von Telekommunikationsverbindungen und/oder Diensten abläuft, **dadurch gekennzeichnet, dass** bei nicht ausreichender Vermittlungskapazität einer netzeigenen Vermittlungsstelle zur Erhöhung der Vermittlungskapazität von dem Server der Vermittlungsstelle oder einer hierzu autorisierten Stelle eine Anzahl von Softwarepaketen an wenigstens eine weitere Vermittlungsstelle abgesendet wird, die der Anzahl der benötigten Vermittlungsstellen entspricht, um eine benötigte Vermittlungskapazität zu erhalten, wobei jedes Softwarepaket beim Erreichen einer Vermittlungsstelle zumindest zeitweise eine lauffähige Software zur Durchführung einer Massenalarmierung installiert oder eine vorhandene Software zur Durchführung einer Massenalarmierung aktiviert und diese Vermittlungsstelle nach der Installation / Aktivierung als von der Software belegt kennzeichnet, so dass weitere an eine belegte Vermittlungsstelle einlaufende Softwarepakete automatisch abgewiesen und umgeleitet werden bis dass sämtliche versandte Softwarepakete eine freie Vermittlungsstelle aufgefunden und belegt haben.

2. Verfahren nach einem der vorherigen Ansprüche, **dadurch gekennzeichnet, dass** vor der Übertragung/Aktivierung einer Software bei einem Telekommunikationsnetzwerk dessen Aktivität und/oder die verfügbaren Vermittlungskapazitäten erfragt werden.

3. Verfahren nach einem der vorherigen Ansprüche, **dadurch gekennzeichnet, dass** die Auswahl wenigstens eines Telekommunikationsnetzwerkes unter mehreren nach der verfügbaren Vermittlungskapazität und/oder nach einem Quoten-/Prioritätenschlüssel erfolgt.

4. Verfahren nach einem der vorherigen Ansprüche, **dadurch gekennzeichnet, dass** ein Softwarepaket ein sich selbst immer wieder verschickendes Programm oder Makro ist.

5. Verfahren nach einem der vorherigen Ansprüche, **dadurch gekennzeichnet, dass** nach einer Zeitdauer eine Deinstallation/Deaktivierung der Software auf nicht mehr benötigten Vermittlungsstellen erfolgt.

6. Verfahren nach einem der vorherigen Ansprüche, **dadurch gekennzeichnet, dass** eine Software eine automatische Benachrichtigung wenigstens einer Gruppe von Personen der Bevölkerung durchführt zur Alarmierung in Gefahrensituationen.

7. Verfahren nach einem der vorherigen Ansprüche, **dadurch gekennzeichnet, dass** eine Software, zumindest vor einer Übertragung, in einem Server eines zertifizierten Trust-Centers abläuft.

8. Verfahren nach einem der vorherigen Ansprüche, **dadurch gekennzeichnet, dass** eine Software zur Durchführung von Vermittlungen Zugriff nimmt auf eine Portabilitätsdatenbank mit netzübergreifenden Netzkennungen zu vermittelnder/benachrichtigender Personen und/oder auf eine Datenbank eines ausgewählten Telekommunikationsnetzwerkes.

9. System, welches ein Telekommunikationsnetzwerk umfasst mit einem Server, auf dem eine Software zur Durchführung von Vermittlungen abläuft **dadurch gekennzeichnet, dass** bei nicht ausreichender Vermittlungskapazität einer netzeigenen Vermittlungsstelle zur Erhöhung der Vermittlungskapazität ein Server der Vermittlungsstelle oder einer hierzu autorisierten Stelle eingerichtet ist, eine Anzahl von Softwarepaketen an wenigstens eine weitere Vermittlungsstelle abzusenden, die der Anzahl der benötigten Vermittlungsstellen entspricht, um eine benötigte Vermittlungskapazität zu erhalten, wobei jedes Softwarepaket eingerichtet ist beim Erreichen einer Vermittlungsstelle zumindest zeitweise eine lauffähige Software zur Durchführung einer Massenalarmierung zu installieren oder eine vorhandene Software zur Durchführung einer Massenalarmierung zu aktivieren und diese Vermittlungsstelle nach der Installation / Aktivierung als von der Software belegt zu kennzeichnen, so dass weitere an eine belegte Vermittlungsstelle einlaufende Softwarepakete automatisch abgewiesen und umgeleitet werden bis dass sämtliche versandte Softwarepakete eine frei Vermittlungsstelle aufgefunden und belegt haben.

## Claims

1. Method for operating at least one telecommunication network, wherein a piece of software for performing switching operations for telecommunication links and/or services is executed on a central server at an exchange for the at least one telecommunication network, **characterized in that** if there is not sufficient switching capacity at a network-dedicated exchange then the switching capacity is increased by virtue of the server of the exchange or a station that is authorized in this regard sending a number of software packages to at least one further exchange that corresponds to the number of required exchanges in order to obtain a required switching capacity, wherein each software package, upon reaching an exchange, at least intermittently installs a piece of executable software for performing mass alerting or activates an existent piece of software for performing mass alerting and, following installation/activation, denotes this exchange as occupied by the software, so that further software packages arriving at an occupied exchange are automatically rejected and diverted until all of the software packages sent have found and occupied a free exchange.

2. Method according to the preceding claim, **characterized in that** before a piece of software is transmitted/activated a telecommunication network is asked about its activity and/or the available switching capacities.

3. Method according to either of the preceding claims, **characterized in that** at least one telecommunication network among a plurality is selected on the basis of the available switching capacity and/or on the basis of a rate/priority key.

4. Method according to one of the preceding claims, **characterized in that** a software package is a program or macro that repeatedly sends itself.

5. Method according to one of the preceding claims, **characterized in that** after a period of time the software on exchanges that are no longer required is uninstalled/deactivated.

6. Method according to one of the preceding claims, **characterized in that** a piece of software performs automatic notification of at least one group of people in the population for alerting purposes in hazard situations.

7. Method according to one of the preceding claims, **characterized in that** a piece of software is executed, at least prior to transmission, on a server of a certified trust centre.

8. Method according to one of the preceding claims, **characterized in that** piece of software for performing switching operations accesses a portability data base having cross-network network identifiers for people requiring switching/notification and/or accesses a data base of a selected telecommunication network.

9. System that comprises a telecommunication network having a server on which a piece of software for performing switching operations is executed, **characterized in that** if there is not sufficient switching capacity at a network-dedicated exchange then the switching capacity is increased by virtue of a server of the exchange or a station that is authorized in this regard being set up to send a number of software packages to at least one further exchange that corresponds to the number of required exchanges in order to obtain a required switching capacity, wherein each software package is set up so that, upon reaching an exchange, it at least intermittently installs a piece of executable software for performing mass alerting or activates an existent piece of software for performing mass alerting and, following installation/activation, denotes this exchange as occupied by the software, so that further software packages arriving at an occupied exchange are automatically rejected and diverted until all of the software packages sent have found and occupied a free exchange.

## Revendications

1. Procédé de mise en fonctionnement d'au moins un réseau de télécommunications, dans lequel un logiciel destiné à effectuer des commutations de liaisons de télécommunications et/ou de services s'exécute sur un serveur central d'un central de commutation de l'au moins un réseau de télécommunications, **caractérisé en ce que**, lorsque la capacité de commutation d'un central de commutation propre au réseau est insuffisante, un nombre de paquets logiciels qui correspond au nombre de centraux de commutation nécessaires est envoyé à au moins un autre central de commutation pour augmenter la capacité de commutation du serveur du central de commutation ou d'un central autorisé à cet effet, afin d'obtenir une capacité de commutation nécessaire, dans lequel chaque paquet logiciel, lorsqu'il atteint un central de commutation, installe au moins par instants un logiciel exécutable destiné à mettre en oeuvre une mise en alerte générale ou active un logiciel présent destiné à mettre en oeuvre une mise en alerte générale et caractérise ledit central de commutation comme étant authentifié par le logiciel après l'installation/l'activation de manière à ce que d'autres paquets logiciels acheminés vers un central de commutation authentifié soient automatiquement refusés et déviés jusqu'à ce que la totalité des paquets logiciels envoyés aient découvert un central de commutation libre et aient été authentifiés.

2. Procédé selon l'une quelconque des revendications précédentes, **caractérisé en ce que**, avant la transmission/l'activation d'un logiciel sur un réseau de télécommunication son activité et/ou ses capacités de commutation disponibles sont demandées.

3. Procédé selon l'une quelconque des revendications précédentes, **caractérisé en ce que** la sélection d'au moins un réseau de télécommunications s'effectue entre autres conformément à la capacité de commutation disponible et/ou conformément à une clé de quotas/de priorités.

4. Procédé selon l'une quelconque des revendications précédentes, **caractérisé en ce qu'**un paquet logiciel est un programme ou une macro se renvoyant lui-même/elle-même automatiquement.

5. Procédé selon l'une quelconque des revendications précédentes, **caractérisé en ce qu'**il se produit au bout d'un certain temps une désinstallation/désactivation du logiciel sur des centraux de commutation qui ne sont plus nécessaires.

6. Procédé selon l'une quelconque des revendications précédentes, **caractérisé en ce qu'**un logiciel effectue une notification automatique d'au moins un groupe de personnes de la population à des fins de mise en alerte dans des situations de danger.

7. Procédé selon l'une quelconque des revendications précédentes, **caractérisé en ce que**, au moins avant une transmission, un logiciel s'exécute sur un serveur d'un centre de confiance sécurisé.

8. Procédé selon l'une quelconque des indications précédentes, **caractérisé en ce qu'**un logiciel destiné à effectuer des commutations accède à une banque de données de portabilité à l'aide d'identifiants de réseau couvrant l'ensemble du réseau et concernant des personnes notifiées/averties et/ou à une banque de données d'un réseau de télécommunications sélectionné.

9. Système comprenant un réseau de télécommunication qui comporte un serveur sur lequel s'exécute un logiciel destiné à mettre en oeuvre des communications, **caractérisé en ce que**, lorsque la capacité de communication d'un central de commutation propre au réseau est insuffisante, un serveur du central de commutation ou d'un central autorisé à cet effet est conçu pour envoyer un nombre de paquets logiciels qui correspond au nombre de centraux de commutation nécessaires à au moins un autre central de commutation pour augmenter la capacité de commutation, afin d'obtenir une capacité de commutation nécessaire, dans lequel chaque paquet logiciel, lorsqu'il atteint un central de commutation, est conçu pour installer au moins par instants un logiciel exécutable destiné à mettre en oeuvre une mise en alerte générale ou pour activer un logiciel présent destiné à mettre en oeuvre une mise en alerte générale et pour identifier ledit central de commutation comme étant authentifié par le logiciel après l'installation/l'activation de manière à ce que d'autres paquets logiciels acheminés vers un central de commutation authentifié soient automatiquement refusés et déviés jusqu'à ce que la totalité des paquets logiciels envoyés aient découvert un central de commutation libre et aient été authentifiés.
